# EUROPEAN PATENT SPECIFICATION

(11) **EP 2 123 438 B1**
(45) Date of publication and mention of the grant of the patent: **27.11.2013**
(21) Application number: 08156834.7
(22) Date of filing: 23.05.2008
(51) Int. Cl.: B32B 3/12, B32B 5/28, B31D 3/02, E04C 2/36

(54) **Method and apparatus for treating the peripheral region of a sandwich component**
Verfahren und Vorrichtung zur Behandlung des Peripheriebereichs einer Verbundkomponente
Procédé et appareil de traitement de la région périphérique d'une pièce sandwich

(43) Date of publication of application: 25.11.2009
(73) Proprietor: NORDSON CORPORATION, Westlake, OH 44145-1119 (US)
(72) Inventor: Dittmers, Jürgen, 21335 Lüneburg (DE); Klein, Jörg, 21394 Heiligenthal (DE); Bagung, Jörg-Olaf, 21407 Deutsch-Evern (DE)
(74) Representative: Eisenführ, Speiser & Partner

(56) References cited:
- EP-A- 1 468 805
- WO-A-01/19604
- DE-A1- 10 208 830
- DE-A1- 10 208 831
- US-A1- 2007 054 087
- US-A1- 2007 224 350

## Description

The present invention relates to a method for treating an peripheral region of a sandwich component, in particular of a sandwich component having a honeycomb structure and two spaced-apart coating layers and a core structure having a plurality of cavities.

The invention further relates to a device for treating the peripheral region of the sandwich component, in particular for performing the method of any of the above claims, comprising a conveying means for transporting the sandwich component being treated.

Sandwich components are well-known and used in different technical fields and industries as workpieces. A sandwich component has a relatively low weight and at the same time has a relatively high strength. An example of such sandwich component is of the type having a honeycomb structure. Typically, the sandwich components comprise a core structure, such as a honeycomb, which are covered by two spaced-apart outer coating layers. Such sandwich components may be used for example in the automotive industry or airplane industry as structural elements or in the furniture industry as workpieces to produce e.g. tables, shelves, doors or other products.

In the prior art, it is often necessary to prepare the sandwich component to make it suitable for this specific use and application. For many applications, for example in the furniture industry, it is desired to prepare and treat the peripheral region of the sandwich component.

In order to cover the cavities within the core structure at the peripheral region, a so-called support edge is bonded to the peripheral region by means of a glue. Before the support edge is glued into the peripheral region, it is necessary to mill the peripheral region of the core structure by means of a milling machine or other tooling. The core structure is milled in a depth, which corresponds to the thickness of the support edge. The support edge is for example made of wood. After the milling step, glue is applied to the milled region, and the support edge is pressed into the milled region.

This known method of milling and subsequently gluing the support edge into the peripheral region is quite complicated. The milling step is expensive and requires complex machinery. The support edge must be prepared in the specific dimensions of the sandwich components, which makes this matter even more complicated. After the support edge has been attached to the sandwich component, a decor edge must further be attached to the support edge, which makes the preparation of the sandwich component even more complicated and expensive. Furthermore, different decor edges in different width and thicknesses must be provided.

There exists a need to provide a method and apparatus for treating the peripheral region of a sandwich component which is simpler and less complicated.

Thus, it is the object of the present invention to provide a method and apparatus for treating a peripheral region of a sandwich component, in particular a sandwich component having a honeycomb structure, which has two spaced-apart coating layers and a core structure having a plurality of cavities.

The invention solves this problem by providing a method having the features of claim 1, in particular by the steps of applying a layer of liquid thermoplastic material onto an peripheral region of the sandwich component such that thermoplastic material penetrates into cavities in the core structure of the sandwich component, and hardening the applied thermoplastic material.

The invention further solves this problem by providing a device having the features of claim 23, which is characterized by two dispensing apparatuses arranged adjacent to the conveying means in order to dispense thermoplastic material onto opposite peripheral regions of the sandwich component., wherein each applying device has a transfer device, which receives thermoplastic material from a material dispensing device and transfers the material to the peripheral region of the sandwich component.

By applying a layer of liquid thermoplastic material onto the peripheral region, the thermoplastic material penetrates into cavities or voids in the core structure. The cavities are at least partly closed by the thermoplastic material. The thermoplastic material then hardens. The result is a layer of hard or stiff thermoplastic material in the peripheral region at the edge. As a result, the sandwich component is ready for further processing. In particular, the sandwich component is ready for applying a decor edge, if desired. The invention avoids a complicated preparation of the edge region by milling and by putting a support edge into the milled region and bonding it in by means of adhesive material. The invention results in a much easier treatment of the sandwich component. By pressing thermoplastic material into the cavities, the honeycomb structure is hardened and has a higher strength. All open cores can be closed, so that a very smooth and even surface is obtained. While the open cores, cavities or voids can be closed, they do not have to be completely filled with thermoplastic material. It would be sufficient if these cores voids or cavities are partly filled with thermoplastic material.

Further, the applied and hardened thermoplastic material results in an additional structural support of the peripheral region of the sandwich component, thus not only closing or sealing the peripheral region but also providing a higher strength and improved mechanical properties.

The invention can be used in particular to make sandwich components for use in the furniture industry, in particular for use in finished boards for furniture. Furthermore, as an example, the invention can be applied to manufacture and treat sandwich components made of wooden and/or paper structures. For example, the honeycomb core structure may be made of paper. By applying the thermoplastic material into the voids of such honeycomb structure, the voids are at least partly filled and/or closed, resulting in a proper even surface and additional mechanical strength.

In accordance with the preferred embodiment of the method, the thermoplastic material is applied onto the peripheral region in such an amount that a substantially closed peripheral coating layer which closes and/or seals the cavities of the core structure to the outside is formed in the region of the outer surface of the applied thermoplastic material after hardening. By creating of the substantially closed coating layer, the core structure is completely sealed and thus fully prepared for attaching a decor edge. The smooth and even surface is generated by the sealing layer of adhesive material.

Preferably, the thermoplastic material is applied onto the peripheral region in such a manner that it is substantially aligned with the peripheral surface of the coating layers. After the alignment, a further decor edge can simply be attached to the pre-treated edge region.

In a further preferred embodiment, in that the thermoplastic material is applied onto the peripheral region of the sandwich component substantially in the region of the core structure only. A minimum amount of material is applied in this way, and the outer dimensions of a component are not changed by the application of the thermoplastic material.

In another alternative embodiment, the thermoplastic material is applied onto the peripheral region of the coating layers and the peripheral region of the core structure. A completely coated edge region is achieved.

In accordance with another embodiment, the thermoplastic material is applied in a thinner layer in the peripheral region of the coating layers than in the peripheral region of the core structure.

It is further preferred that the thermoplastic material is applied onto the peripheral region of the core structure and penetrates into the cavities in such an amount that the core structure in the peripheral region is embedded in the hardened thermoplastic material. The strength and stiffness of the component in particular within the core structure is enhanced by embedding the core structure within the thermoplastic material.

In accordance with a further embodiment, the thermoplastic material is applied in such an amount that a peripheral coating layer with a thickness ranging from 0.01 mm to 40 mm, preferably in a range between 2 mm and 4 mm is formed in the hardened state.

In accordance with an alternative embodiment, the thermoplastic material is a hot-melt adhesive, an ethylene-vinyl-acetate hot-melt adhesive, a wax, a polyamide, a polyester, a polyurethane or a polyolefine.

The advantages of the invention apply in particular in an embodiment in which the core structure is embodied as a honeycomb structure or a foam structure.

Preferably, the thermoplastic material is applied by means of a slot nozzle arrangement or by means of a roller dispenser apparatus. The slot nozzle arrangement is preferably having a slot nozzle which is adjustable in width. The width of the layer of adhesive material can easily be adjusted to the width of the sandwich component. The adjustment is developed further in that the width of the slot nozzle can be modified on one side by means of a stopper member and that the entire slot nozzle can be linerarly displaced and fixed.

In accordance with a further embodiment, the outlet opening of the slot extends in a substantially vertical direction during operation. This allows a simple transport of the sandwich component in a horizontal orientation, and a thermoplastic material is applied from opposite sides of the transport path.

Preferably, the transfer device comprises a transfer element in the form of a belt, rail or band, onto which the thermoplastic material is applied and which can be brought into contact with the peripheral region of the sandwich component.

In particular, it is preferred that the transfer device has an endless circulating belt, and thermoplastic material can be applied to each endless belt, said endless belts being disposed adjacent to the path of movement of the sandwich component such that the thermoplastic material can be applied onto the respective peripheral region by the endless belt contacting the peripheral region of the sandwich component.

In a further preferred embodiment the step of temperature conditioning the transfer device is suggested.

In a preferred embodiment, the thermoplastic material is applied onto the peripheral region of the sandwich component by means of an endless circulating belt. The endless or non endless circulating belt allows a simple application of the layer in a continuous process. The endless belt is preferably made of sheet metal which has the characteristic that the hot melt thermoplastic material is cooled instantaneously and does not adhere to the belt. If necessary, the sheet metal has an anti-stick coating.

The process can be further enhanced, if the endless belt is cooled by means of a cooling device. The hardening of the adhesive material can be expedited and controlled by the cooling device.

Preferably, the cooling device can be controlled in such a manner that the thermoplastic material can be cooled to a given temperature during contact with the endless belt. Positive results are achieved if the temperature is in a range between 90°C and 250°C and/or if the duration that the endless belt is in contact with the sandwich component is in a range between 1 and 10 seconds, preferably 3 to 4 seconds and/or if the length of contact when the endless belt is in contact with the sandwich component is in a range between 50 and 1000 mm. Thus, the invention allows that the method and device is controlled and adjusted depending on the parameters of the method and device and temperature, in particular the application temperature of thermoplastic material, preferably a thermoplastic adhesive material. The method and apparatus can be controlled depending on all these parameters to achieve the above described temperature values, contact times and length of contact.

In accordance with an apparatus according to claim 23, the sandwich component is pre-treated at both edge regions at the same time, so that subsequently after applying the layer of thermoplastic material a further treatment may take place such as attaching a decor edge.

In accordance with a preferred embodiment each dispensing apparatus has a slot nozzle arrangement or a roller dispensing apparatus adjacent to the endless belt or other transfer device. An easy adaption to the size of the workpiece is achieved if the distance of the dispensing apparatus from the path of movement is adjustable. In accordance with a method, it is preferred to provide a cooling device disposed adjacent to the endless belt or other transfer device in order to cool the endless belt.

The invention is further described with reference to a preferred embodiment of the apparatus and method which are illustrated with reference to the attached drawings. The drawings show:
- Fig. 1: a device for treating the peripheral region of a sandwich component in a perspective view;
- Fig. 2: the device of fig. 1 as top view;
- Fig. 3: an enlarged detail of the view according to fig. 2;
- Fig. 4: an example of a sandwich component having a honeycomb core in a perspective view and with an enlarged section;
- Fig. 5: a sandwich component treated in accordance with the method for treating the peripheral region of the component in a cross-sectional view.

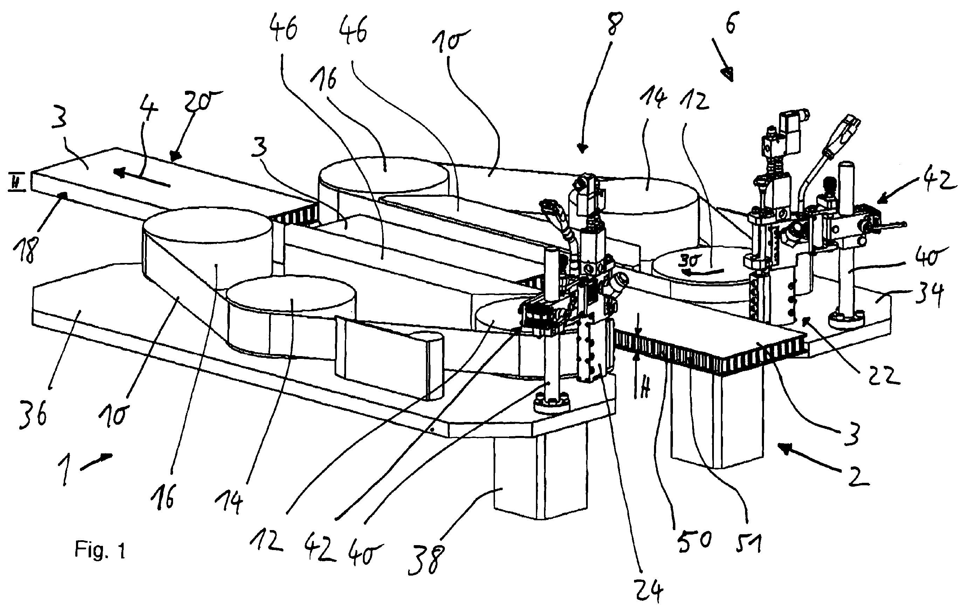

As can be seen in fig. 1, the apparatus or device 1 for treating the peripheral region of the sandwich component in accordance with the invention comprises a conveying means 2 for transporting the sandwich component being treated. The conveying means 2 comprises a conveyer belt (not shown), a plurality of rollers and drive means for moving the conveyer belt such that the sandwich components 3 can be transported horizontally in a linear path of movement, illustrated by arrow 4. Apparatus 1 comprises a controlling device (not shown) for controlling all components such as the conveying means 2.

Two dispensing devices 6, 8 are arranged adjacent to the conveying means 2, in order to dispense thermoplastic material onto opposite peripheral regions of the sandwich component 3, as the components are moved along applying devices 6, 8. Each dispensing device 6, 8 has a transfer device for transferring thermoplastic material to the sandwich component, which in the shown embodiment has an endless circulating belt 10. Each endless circulating belt 10 is guided by rollers 12, 14, 16, each roller having a vertical axis of rotation. The rollers 12, 14, 16 can be adjusted such that the endless belt 10 has a desired tension. At least one of the rollers 12, 14, 16 is driven by means of driving means, preferably an electric motor, and controlled by the controlling device such that the speed of the belt 10 can be varied and adjusted to the speed of the sandwich components 3. The direction of movement of belts 10 is such that the sections of the belt 10 which are positioned parallel with respect to the opposite peripheral regions 18, 20 of the component, move in the same direction 4 as the component 3.

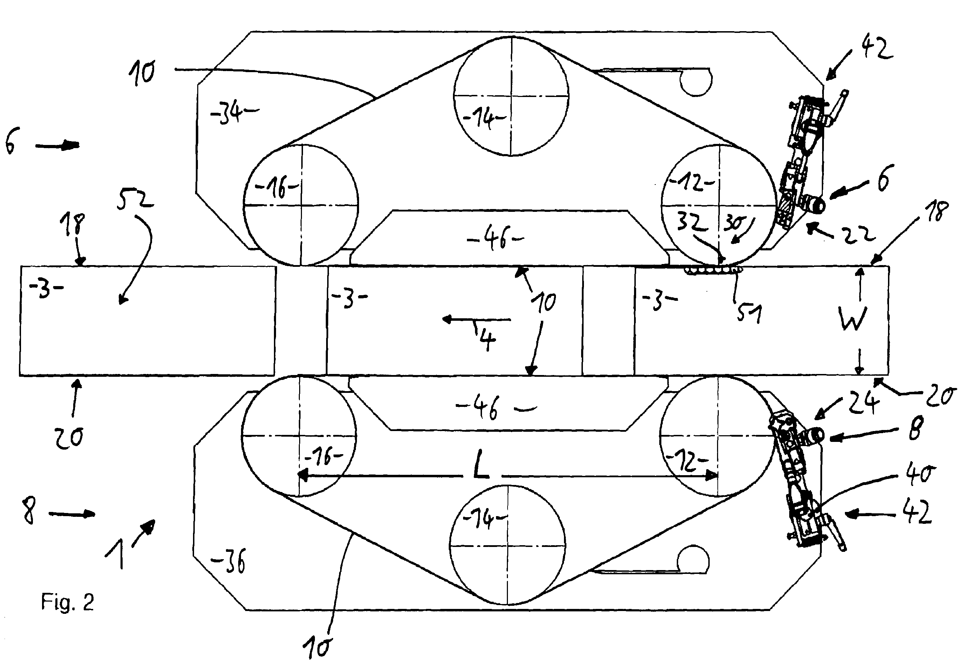

As can also be seen from fig. 1 and 2., each applying device 6, 8 comprises a slot nozzle arrangement 22, 24. The slot nozzle arrangement 22, 24 is connected to a source of thermoplastic material such as a melter or bulk melter for providing liquid thermoplastic material. Such slot nozzle arrangement 22, 24 are also referred to as application heads and comprise a valve arrangement (not shown) in order to control the flow and applying of material. The slot nozzle can be for example the Nordson slot nozzle EB 60 V.

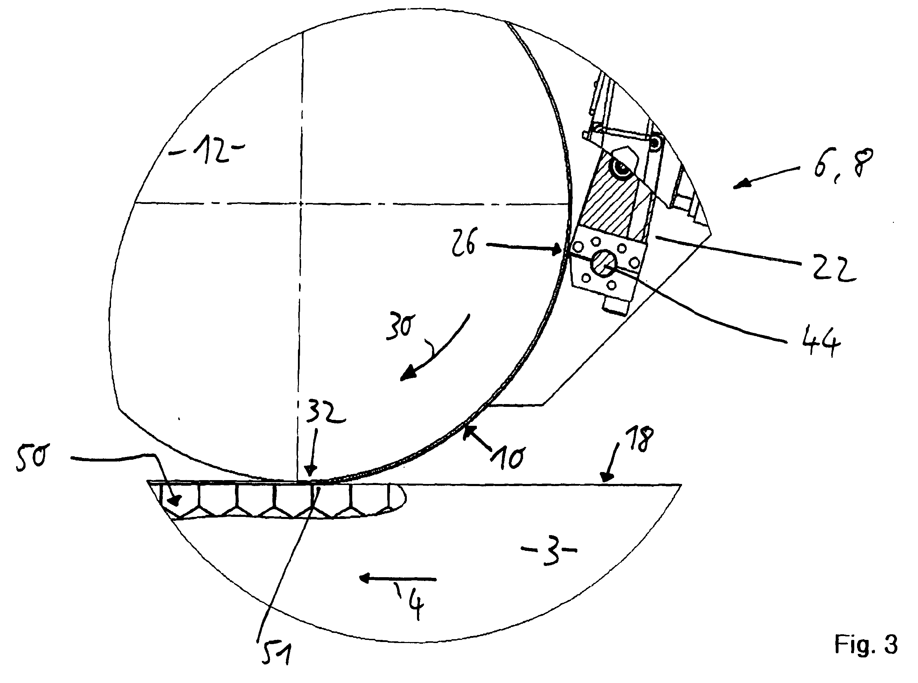

As fig. 3 illustrates, each slot nozzle arrangement 22, 24 has a slot-shaped outlet channel 26 through which liquid material is applied. The applied thermoplastic can be applied to each endless belt 10. Because said endless belts 10 are disposed adjacent to the path of movement of the sandwich component 3, the thermoplastic material can be applied onto the respective peripheral region 18, 20 by the endless belt contacting the peripheral region of the sandwich component. The thermoplastic material moves on the outer periphery of belt 10 along the direction of arrow 30 and comes at a contact portion 32 in contact with the outer periphery 18 of component 3.

As fig. 1 and fig. 2 illustrate, the distance of the dispensing apparatus from the path of movement is adjustable. The rollers 12, 14, 16 and the slot nozzle arrangements 22, 24 are mounted onto a mounting structure 34, 36 which has the form of a plate. This mounting structure 34, 36 can be adjusted at different positions and at different distances to the path of movement of the components 3. To this end, mounting structures 34 and 36 are moveable and can be fixed to a supporting structure 38, e.g. a frame. Thus, it is possible to treat components 3 having different widths (W) (see fig. 2.).

Further, the applying devices are designed to be vertically adjustable, such that the height of the endless belt can be varied. The support structure 34, 36 can be fixed at different heights to the supporting frame structure 38. As can be seen from fig. 1, a vertical post 40 is connected to the support structure 34, 36. The slot nozzle arrangement 22 can fixed at different positions to the post 40 by means of a clamping device 42 comprising bolds in order to fix the slot nozzle arrangement 22, 24 at a desired height.

The clamping devices 42 allow positioning the slot nozzle arrangement 22, 24 in different angular positions with respect to posts 40, so that it is possible to adjust the distance between the outlet channels 26 (fig. 3.) of the slot nozzle arrangement 22, 24 with respect to the roller 12 and belt 10. This maybe required in order to adjust the slot nozzle arrangements 22, 24 to different belts 10 having different thicknesses or to the actual properties of the thermoplastic material. The outlet channels 26 or openings of the slot extend in a substantially vertical direction during operation.

The slot nozzle arrangement 22, 24 allows an adjustment of the length of the outlet channel 26, in fig. 3. in the vertical direction. To this end, the width of the slot nozzle can be modified on one side by means of a stopper member and that the entire slot nozzle can be linearly displaced and fixed. The stopper member 44 is positioned within an internal channel of slot nozzle arrangement 22, 24. Stopper member 44 is connected to a rod which is moveable along its longitudinal axis such that the length of the internal flow channel can be varied. Thus, the effective length of the outlet channel 26 can be adjust and adapted to the height H (see fig. 1, 4 and 5) as is explained above, the whole slot nozzle arrangement 22 can be vertically adjusted by means of post 40 and clamping unit 42. In combination with moveable stopper member 44 the effective width of the applied material flows out of auto channel 26 can be adjusted. The endless belt or transfer device is made of sheet metal. The sheet metal may have an anti-stick coating, if desired..

A cooling device 46 (see fig. 2) is disposed adjacent to the endless belt or the transfer device 10 in order to cool the endless belt. As an example, each cooling device 46 comprises an air slot nozzle device which is connectable to a source of pressurized air and which has a slot-shaped outlet channel through which an air sheet is applied towards the inner periphery of belt 10. The air sheet cools the belt. As an example, the slot shaped outlet channel is arranged perpendicularly with respect to the belt 10, such that the air flowing out of the slot nozzle flows in an right angle towards the belt 10. Instead of a slot-shaped outlet channel, air can alternatively flow out of one or more cylindrical orifices and flow towards the transfer belt in order to cool it. The flow of air can be controlled in a way that the thermoplastic material is sufficiently hardened and that a desired through put off sandwich components 3 can be achieved. This can be achieved by adjusting the volume flow and/or the velocity of air flow being dispensed from the outlet channel cooling device 46. The cooling device can be controlled in such a manner that the thermoplastic material can be cooled to a given temperature during contact with the endless belt. The temperature is in a range between 140 and 190°C. Instead of air, a liquid cooling material might be employed, e.g. water which can be sprayed to the inner peripheral surface of belt 10.

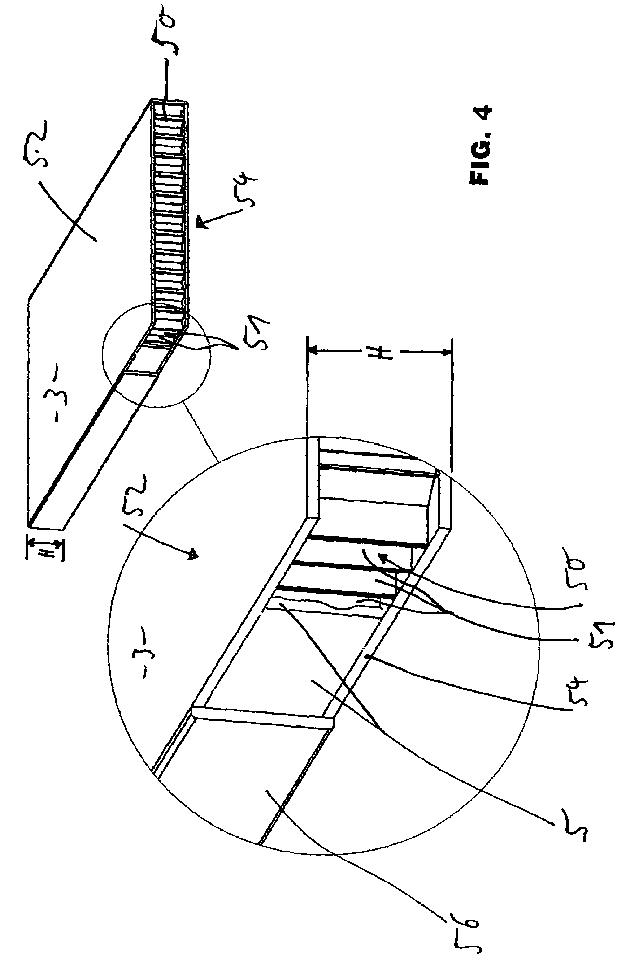

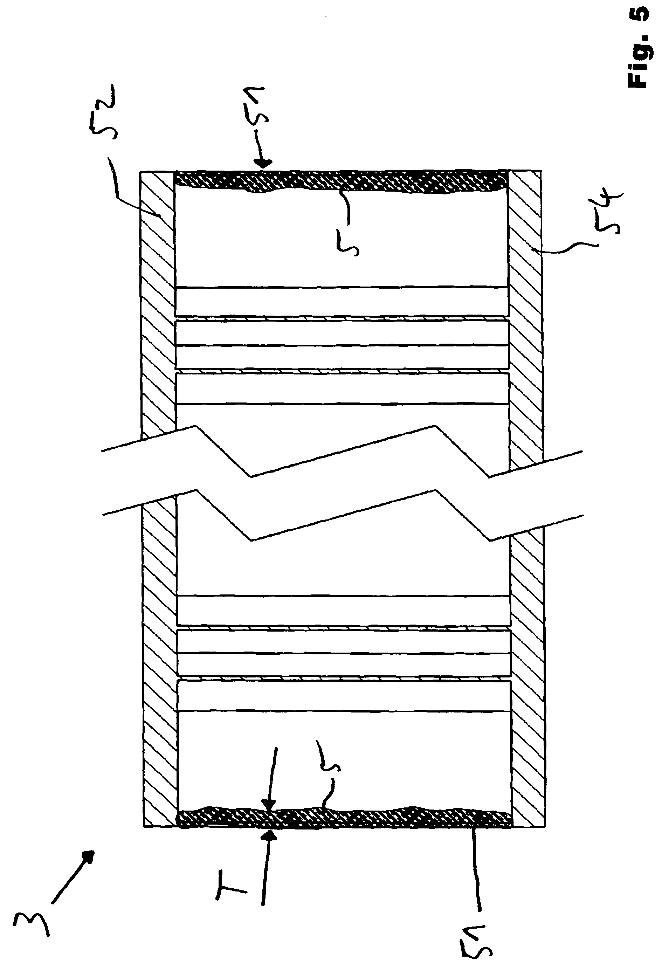

Figures 4 and 5 illustrate a sandwich component which is treated and manufactured in accordance with the method. The sandwich component 3 has a honeycomb core structure 50 and two spaced-apart outer coating layers 52, 54. The two coating layers 52, 54 are formed of sheets or skins, e.g. made of wood or metal or plastic material and are relatively stiff. The core structure 50 maybe a honeycomb structure. Alternatively, it may have an open or closed cell structure. The honeycomb structure may be made of paper, plastic material, glass or carbon reinforced laminates and the like.

The method and apparatus for treating the sandwich component is further explained in the following with reference to the figures.

Thermoplastic material is applied as a layer by means of the slot nozzle arrangement 22, 24 onto the belt 10 and then transferred along arrow 30 with the belt 10 towards contact region 32. When the component 3 reaches the contact region 32, the layer of liquid thermoplastic material is applied and deposited onto both peripheral regions 18, 20 of the sandwich component 3 such that thermoplastic material penetrates into cavities 51 in the core structure of the sandwich component. The thermoplastic material hardens within the cavities 51.

The thermoplastic material is applied onto the belts 10 and then onto the peripheral regions 18, 20 in such an amount that a substantially closed peripheral coating layer is formed, which closes and/or seals the cavities of the core structure to the outside, after hardening, as best can be seen in Fig. 4 and Fig. 5. The thermoplastic material is applied onto the peripheral region in such a manner that it is substantially aligned with the peripheral surface of the coating layers 52, 54. A flat outer surface is created, whereas the inner surface of hardened thermoplastic material may be at least partly curved (see Fig. 5). The thermoplastic material is applied onto the peripheral region of the core structure 50 and penetrates into the cavities 51 in such an amount that the core structure in the peripheral region is embedded in the hardened thermoplastic material. Fig 5 illustrates, that the thermoplastic material is applied onto the peripheral region of the sandwich component substantially in the region of the core structure 50 only.

As is not shown, the thermoplastic material can be applied onto the peripheral region of the coating layers 52, 54 and the peripheral region of the core structure 50. In this case, the thermoplastic material is applied in a thinner layer in the peripheral region of the coating layers 52, 54 than in the peripheral region of the core structure 50.

In the shown embodiment, the thermoplastic material is applied in such an amount that a peripheral coating layer with a thickness or an average thickness T (see Fig. 5) ranging from 0.01 mm to 40 mm, preferably in a range between 2 mm and 4 mm is formed in the hardened state. The thermoplastic material is e.g. a hot-melt adhesive, an ethylene-vinyl-acetate hot-melt adhesive, a wax, a polyamide, a polyester, a polyurethane or a polyolefin.

The cooling device 46 can be controlled in such a manner that the thermoplastic material is cooled to a predetermined temperature during contact with the endless belt. The temperature is in a range between 90°C and 250°C.

The controlling device (not shown) controls the components such that the duration that the endless belt is in contact with the sandwich component is in a range between 1 and 10 seconds, preferably 3 to 4 seconds, and/or that the length L (see Fig. 2) of contact when the endless belt is in contact with the sandwich component is in a range between 50 and 1000 mm.

As Fig. 4 shows, a further edge band or edge protection 56 is attached to the edge region, in particular the layer of thermoplastic material applied as described above. This requires a further step subsequently to the deposition of the thermoplastic material 5 within the cavities 51.

## Claims

1. A method for treating a peripheral region of a sandwich component, in particular of a sandwich component having a honeycomb structure and two spaced-apart coating layers and a core structure having a plurality of cavities,
**characterized by**
applying a layer of liquid thermoplastic material onto an peripheral region of the sandwich component such that thermoplastic material penetrates into cavities in the core structure of the sandwich component, wherein the thermoplastic material is applied onto the peripheral region of the sandwich component substantially in the region of the core structure only, and
hardening the applied thermoplastic material.

2. The method of claim 1,
**characterized in that** the thermoplastic material is applied onto the peripheral region in such an amount that a substantially closed peripheral coating layer which closes and/or seals the cavities of the core structure to the outside is formed in the region of the outer surface of the applied thermoplastic material after hardening.

3. The method of claim 1 and/or claim 2,
**characterized in that** the thermoplastic material is applied onto the peripheral region in such a manner that it is substantially aligned with the peripheral surface of the coating layers.

4. The method of any of the preceding claims,
**characterized in that** the thermoplastic material is applied in a thinner layer in the peripheral region of the coating layers than in the peripheral region of the core structure.

5. The method of any of the preceding claims,
**characterized in that** the thermoplastic material is applied onto the peripheral region of the core structure and penetrates into the cavities in such an amount that the core structure in the peripheral region is at least partly embedded in the hardened thermoplastic material.

6. The method of any of the preceding claims,
**characterized in that** the thermoplastic material is applied in such an amount that a peripheral coating layer with a thickness ranging from 0.01 mm to 40 mm, preferably in a range between 2 mm and 4 mm is formed in the hardened state.

7. The method of any of the preceding claims,
**characterized in that** the thermoplastic material is a hot-melt adhesive, an ethylene-vinyl-acetate hot-melt adhesive, a wax, a polyamide, a polyester, a polyurethane or a polyolefin.

8. The method of any of the preceding claims,
**characterized in that** the core structure is embodied as a honeycomb structure or a foam structure.

9. The method of any of the preceding claims,
**characterized in that** the thermoplastic material is applied by means of a slot nozzle arrangement or by means of a roller dispenser apparatus.

10. The method of claim 9,
**characterized in that** the slot nozzle arrangement has a slot nozzle which in particular is adjustable in width.

11. The method of claim 10,
**characterized in that** the width of the slot nozzle can be modified on one side by means of a stopper member and that the entire slot nozzle can be linerarly displaced and fixed.

12. The method of claim 10 or 11,
**characterized in that** the outlet opening of the slot extends in a substantially vertical direction during operation.

13. The method of any of the preceding claims,
**characterized in that** the thermoplastic material is applied onto the peripheral region by means of a transfer device, which receives thermoplastic material from a material dispensing device and transfers the material to the peripheral region of the sandwich component.

14. The method of claim 13,
**characterized in that** the transfer device comprises a transfer element in the form of a belt, rail or band, onto which the thermoplastic material is applied and which can be brought into contact with the peripheral region of the sandwich component.

15. The method of claims 13 or 14,
**characterized in that** the thermoplastic material is applied onto the peripheral region of the sandwich component by means of an endless circulating belt.

16. The method of claim 15.
**characterized in that** the endless belt is made of sheet metal.

17. The method of claim 16,
**characterized in that** the sheet metal has an anti-stick coating.

18. The method of any of the preceding claims 13 to 16,
**characterized by** the step of temperature conditioning the transfer device.

19. The method of any of claims 13 to 18,
**characterized in that** the endless belt is cooled by means of a cooling device.

20. The method of claim 19,
**characterized in that** the cooling device can be controlled in such a manner that the thermoplastic material can be cooled to a given temperature during contact with the endless belt.

21. The method of claim 20,
**characterized in that** the temperature is In a range between 140 and 190°C.

22. The method of any of claims 16 to 21.
**characterized in that** the duration that the endless belt is in contact with the sandwich component is in a range between 1 and 10 seconds, preferably 3 to 4 seconds.

23. The method of any of claims 16 to 22,
**characterized in that** the length of contact when the endless belt is in contact with the sandwich component is in a range between 100 and 700 mm.

24. A device for treating the peripheral region of the sandwich component, in particular for performing the method of any of the above claims,
comprising a conveying means for transporting the sandwich component being treated, **characterized by** two dispensing apparatuses arranged adjacent to the conveying means in order to dispense thermoplastic material onto an opposite peripheral region of the sandwich component substantially in the region of the core structure only,
wherein each dispensing device has a transfer device, which receives thermoplastic material from a material dispensing device and transfers the material to the peripheral region of the sandwich component.

25. The device of claim 24,
**characterized in that** the transfer device comprises a transfer element in the form of a belt, rail or band, onto which the thermoplastic material is applied and which can be brought into contact with the peripheral region of the sandwich component.

26. The device of claim 24 or 25,
**characterized in that** one or each transfer device has an endless circulating belt, and thermoplastic material can be applied to each endless belt, said endless belts being disposed adjacent to the path of movement of the sandwich component such that the thermoplastic material can be applied onto the respective peripheral region by the endless belt contacting the peripheral region of the sandwich component.

27. The device of claim 25,
**characterized in that** each dispensing apparatus has a slot nozzle arrangement or a roller dispensing apparatus adjacent to the endless belt.

28. The device of claim 24 or 25,
**characterized in that** the distance of the dispensing apparatus from the path of movement is adjustable.

29. The device of any of claims 24 to 28,
**characterized in that** the dispensing apparatuses are designed to be vertically adjustable, such that the height of the endless belt can be varied.

30. The device of any of claims 24 to 29,
**characterized by** a cooling device disposed adjacent to the endless belt in order to cool the endless belt.

31. The device of any of claims 24 to 30,
**characterized in that** the length of contact when the endless belt is in contact with the sandwich component is in a range between 100 and 700 mm.

## Patentansprüche

1. Verfahren zum Behandeln eines peripheren Bereichs einer mehrlagigen Komponente, insbesondere einer mehrlagigen Komponente mit einer Wabenstruktur und zwei voneinander beabstandeten Beschichtungslagen sowie einer Kernstruktur mit einer Mehrzahl von Ausnehmungen,
**gekennzeichnet durch**
Aufbringen einer Schicht eines flüssigen thermoplastischen Materials auf einen peripheren Bereich der mehrlagigen Komponente derart, dass thermoplastisches Material in Ausnehmungen in der Kernstruktur der mehrlagigen Komponente eindringt, wobei das thermoplastische Material auf den peripheren Bereich der mehrlagigen Komponente im Wesentlichen ausschließlich in dem Bereich der Kernstruktur aufgetragen wird, und
Aushärten des aufgebrachten thermoplastischen Materials.

2. Verfahren nach Anspruch 1,
**dadurch gekennzeichnet, dass** das thermoplastische Material auf den peripheren Bereich in einer derartigen Menge aufgebracht wird, dass eine im Wesentlichen geschlossene periphere Beschichtungslage in dem Bereich der äußeren Oberfläche des aufgebrachten thermoplastischen Materials nach dem Aushärten gebildet wird, welche die Ausnehmungen der Kernstruktur gegenüber der Umgebung verschließt und/oder versiegelt.

3. Verfahren nach Anspruch 1 und/oder Anspruch 2,
**dadurch gekennzeichnet, dass** das thermoplastische Material auf den peripheren Bereich in einer derartigen Art und Weise aufgebracht wird, dass es im Wesentlichen auf die periphere Oberfläche der Beschichtungslagen ausgerichtet wird.

4. Verfahren nach einem der vorstehenden Ansprüche,
**dadurch gekennzeichnet, dass** das thermoplastische Material in dem peripheren Bereich der Beschichtungslagen in einer dünneren Schicht als in dem peripheren Bereich der Kernstruktur aufgebracht wird.

5. Verfahren nach einem der vorstehenden Ansprüche,
**dadurch gekennzeichnet, dass** das thermoplastische Material auf den peripheren Bereich der Kernstruktur aufgebracht wird und in die Ausnehmungen in einer derartigen Menge eindringt, dass die Kernstruktur in dem peripheren Bereich wenigstens teilweise in das ausgehärtete thermoplastische Material eingebettet wird.

6. Verfahren nach einem der vorstehenden Ansprüche,
**dadurch gekennzeichnet, dass** das thermoplastische Material in einer derartigen Menge aufgebracht wird, dass eine periphere Beschichtungslage mit einer Dicke im Bereich von 0.01 mm bis 40 mm, vorzugsweise in einem Bereich zwischen 2 mm und 4 mm im ausgehärteten Zustand gebildet wird.

7. Verfahren nach einem der vorstehenden Ansprüche,
**dadurch gekennzeichnet, dass** das thermoplastische Material ein Heißschmelzklebstoff, ein Ethylen-Vinylacetat-Heißschmelzklebstoff, ein Wachs, ein Polyamid, ein Polyester, ein Polyurethan oder ein Polyolefin ist.

8. Verfahren nach einem der vorstehenden Ansprüche,
**dadurch gekennzeichnet, dass** das die Kernstruktur als eine Wabenstruktur oder als eine Schaumstruktur ausgebildet ist.

9. Verfahren nach einem der vorstehenden Ansprüche,
**dadurch gekennzeichnet, dass** das thermoplastische Material mittels einer Schlitzdüsenanordnung oder mittels einer Walzenabgabevorrichtung aufgebracht wird.

10. Verfahren nach Anspruch 9,
**dadurch gekennzeichnet, dass** die Schlitzdüsenanordnung eine Schlitzdüse besitzt, welche insbesondere in ihrer Breite einstellbar ist.

11. Verfahren nach Anspruch 10,
**dadurch gekennzeichnet, dass** die Breite der Schlitzdüse auf einer Seite mittels eines Stoppelements verändert werden kann, und dass die gesamte Schlitzdüse linear versetzt und fixiert werden kann.

12. Verfahren nach Anspruch 10 oder 11,
**dadurch gekennzeichnet, dass** sich die Auslassöffnung des Schlitzes in einer im Wesentlichen vertikalen Richtung während des Betriebs erstreckt.

13. Verfahren nach einem der vorstehenden Ansprüche,
**dadurch gekennzeichnet, dass** das thermoplastische Material mittels eines Übertragungsgerätes auf den peripheren Bereich übertragen wird, welches thermoplastisches Material aus einem Materialabgabegerät empfängt und das Material zu dem peripheren Bereich der mehrlagigen Komponente hin überträgt.

14. Verfahren nach Anspruch 13,
**dadurch gekennzeichnet, dass** das Übertragungsgerät ein Übertragungselement in Form eines Gurtes, einer Schiene oder eines Bandes aufweist, auf welches das thermoplastische Material aufgebracht wird, und welches in Kontakt mit dem peripheren Bereich der mehrlagigen Komponente gebracht werden kann.

15. Verfahren nach den Ansprüchen 13 oder 14,
**dadurch gekennzeichnet, dass** das thermoplastische Material auf den peripheren Bereich der mehrlagigen Komponente mittels eines umlaufenden Endlosgurtes aufgebracht wird.

16. Verfahren nach Anspruch 15,
**dadurch gekennzeichnet, dass** der Endlosgurt aus Blech hergestellt ist.

17. Verfahren nach Anspruch 16,
**dadurch gekennzeichnet, dass** das Blech eine Antihaftbeschichtung besitzt.

18. Verfahren nach einem der Ansprüche 13 bis 16,
**gekennzeichnet durch** den Schritt einer Temperaturkonditionierung des Übertragungsgerätes.

19. Verfahren nach einem der Ansprüche 13 bis 18,
**dadurch gekennzeichnet, dass** der Endlosgurt mittels eines Kühlgerätes gekühlt wird.

20. Verfahren nach Anspruch 19,
**dadurch gekennzeichnet, dass** das Kühlgerät auf eine solche Art und Weise gesteuert werden kann, dass das thermoplastische Material auf eine vorbestimmte Temperatur während eines Kontaktes mit dem Endlosgurt gekühlt werden kann.

21. Verfahren nach Anspruch 20,
**dadurch gekennzeichnet, dass** die Temperatur in einem Bereich zwischen 140 und 190 °C liegt.

22. Verfahren nach einem der Ansprüche 16 bis 21,
**dadurch gekennzeichnet, dass** die Dauer, während welcher sich der Endlosgurt in Kontakt mit der mehrlagigen Komponente befindet, in einem Bereich zwischen 1 und 10 Sekunden, vorzugsweise 3 bis 4 Sekunden liegt.

23. Verfahren nach einem der Ansprüche 16 bis 22,
**dadurch gekennzeichnet, dass** die Länge des Kontakts, wenn der Endlosgurt sich in Kontakt mit der mehrlagigen Komponente befindet, in einem Bereich zwischen 100 und 700 mm liegt.

24. Gerät zum Behandeln des peripheren Bereichs der mehrlagigen Komponente, insbesondere zum Ausführen des Verfahrens nach einem der vorstehenden Ansprüche,
umfassend ein Fördermittel zum Transportieren der mehrlagigen Komponente, die behandelt werden soll,
**gekennzeichnet durch** zwei Abgabevorrichtungen, die neben dem Fördermittel angeordnet sind, um thermoplastisches Material auf einen gegenüberliegenden peripheren Bereich der mehrlagigen Komponente im Wesentlichen ausschließlich im Bereich der Kernstruktur abzugeben,
wobei jedes Abgabegerät ein Übertragungsgerät besitzt, welches thermoplastisches Material von einem Materialabgabegerät empfängt und das Material hin zu dem peripheren Bereich der mehrlagigen Komponente überträgt.

25. Gerät nach Anspruch 24,
**dadurch gekennzeichnet, dass** das Übertragungsgerät ein Übertragungselement in Form eines Gurtes, einer Schiene oder eines Bandes aufweist, auf welches das thermoplastische Material aufgebracht wird, und welches in Kontakt mit dem peripheren Bereich der mehrlagigen Komponente gebracht werden kann.

26. Gerät nach Anspruch 24 oder 25,
**dadurch gekennzeichnet, dass** eines oder jedes Übertragungsgerät einen zirkulierenden Endlosgurt besitzt, und dass thermoplastisches Material auf jeden Endlosgurt aufgebracht werden kann, wobei die Endlosgurte angrenzend an den Bewegungspfad der mehrlagigen Komponente angeordnet sind, so dass das thermoplastische Material auf den jeweiligen peripheren Bereich mittels Inkontaktbringens des Endlosgurtes mit dem peripheren Bereich der mehrlagigen Komponente aufgebracht werden kann.

27. Gerät nach Anspruch 25,
**dadurch gekennzeichnet, dass** jede Abgabevorrichtung eine Schlitzdüsenanordnung oder eine Walzenabgabevorrichtung angrenzend an den Endlosgurt besitzt.

28. Gerät nach Anspruch 24 oder 25,
**dadurch gekennzeichnet, dass** der Abstand der Abgabevorrichtung zu dem Bewegungspfad einstellbar ist.

29. Gerät nach einem der Ansprüche 24 bis 28,
**dadurch gekennzeichnet, dass** die Abgabevorrichtungen dazu eingerichtet sind, vertikal einstellbar zu sein, so dass die Höhe des Endlosgurtes variiert werden kann.

30. Gerät nach einem der Ansprüche 24 bis 29,
**gekennzeichnet durch** ein Kühlgerät, welches angrenzend an den Endlosgurt angeordnet ist, um den Endlosgurt zu kühlen.

31. Gerät nach einem der Ansprüche 24 bis 30,
**dadurch gekennzeichnet, dass** die Kontaktlänge, wenn der Endlosgurt sich in Kontakt mit der mehrlagigen Komponente befindet, in einem Bereich zwischen 100 und 700 mm liegt.

## Revendications

1. Procédé de traitement d'une région périphérique d'un composant en sandwich, en particulier d'un composant en sandwich possédant une structure en nid d'abeilles et deux couches de revêtement espacées et une structure centrale possédant une pluralité de cavités,
**caractérisé par**
l'application d'une couche de matériau thermoplastique liquide sur une région périphérique du composant en sandwich, de façon que le matériau thermoplastique pénètre dans les cavités de la structure centrale du composant en sandwich, dans lequel le matériau thermoplastique est appliqué sur la région périphérique du composant en sandwich sensiblement dans la région de la structure centrale seulement, et
le durcissement du matériau thermoplastique appliqué.

2. Procédé selon la revendication 1,
**caractérisé en ce que** le matériau thermoplastique est appliqué sur la région périphérique en une quantité telle qu'une couche de revêtement périphérique essentiellement fermée qui ferme et/ou obture les cavités de la structure centrale par rapport à l'extérieur est formée dans la région de la surface externe du matériau thermoplastique appliqué après durcissement.

3. Procédé selon la revendication 1 et/ou 2,
**caractérisé en ce que** le matériau thermoplastique est appliqué sur la région périphérique de façon à être sensiblement aligné par rapport à la surface périphérique des couches de revêtement.

4. Procédé selon l'une quelconque des revendications précédentes,
**caractérisé en ce que** le matériau thermoplastique est appliqué en une couche plus fine dans la région périphérique des couches de revêtement que dans la région périphérique de la structure centrale.

5. Procédé selon l'une quelconque des revendications précédentes,
**caractérisé en ce que** le matériau thermoplastique est appliqué sur la région périphérique de la structure centrale et pénètre dans les cavités en une quantité telle que la structure centrale dans la région périphérique est au moins partiellement enrobée dans le matériau thermoplastique durci.

6. Procédé selon l'une quelconque des revendications précédentes,
**caractérisé en ce que** le matériau thermoplastique est appliqué en une quantité telle qu'une couche de revêtement périphérique ayant une épaisseur allant de 0,01 mm à 40 mm, de préférence de 2 mm à 4 mm, est formée à l'état durci.

7. Procédé selon l'une quelconque des revendications précédentes,
**caractérisé en ce que** le matériau thermoplastique est une colle thermofusible, une colle thermofusible à base d'éthylène-acétate de vinyle, une cire, un polyamide, un polyester, un polyuréthane ou une polyoléfine.

8. Procédé selon l'une quelconque des revendications précédentes,
**caractérisé en ce que** la structure centrale est conçue sous la forme d'une structure en nid d'abeilles ou d'une structure alvéolaire.

9. Procédé selon l'une quelconque des revendications précédentes,
**caractérisé en ce que** le matériau thermoplastique est appliqué au moyen d'un système à buse à fente ou au moyen d'un appareil de distribution à rouleau.

10. Procédé selon la revendication 9,
**caractérisé en ce que** le système à buse à fente comporte une buse à fente qui est, en particulier, ajustable en largeur.

11. Procédé selon la revendication 10,
**caractérisé en ce que** la largeur de la buse à fente peut être modifiée d'un côté au moyen d'un organe d'arrêt et **en ce que** toute la buse à fente peut être déplacée de manière linéaire et fixée.

12. Procédé selon la revendication 10 ou 11,
**caractérisé en ce que** l'ouverture de sortie de la fente se prolonge dans une direction sensiblement verticale pendant le fonctionnement.

13. Procédé selon l'une quelconque des revendications précédentes,
**caractérisé en ce que** le matériau thermoplastique est appliqué sur la région périphérique au moyen d'un dispositif de transfert qui reçoit le matériau thermoplastique provenant d'un dispositif d'alimentation en matériau et transfert le matériau sur la région périphérique du composant en sandwich.

14. Procédé selon la revendication 13,
**caractérisé en ce que** le dispositif de transfert comprend un élément de transfert sous la forme d'une courroie, d'un rail ou d'une bande sur lequel le matériau thermoplastique est appliqué et qui peut être mis en contact avec la région périphérique du composant en sandwich.

15. Procédé selon la revendication 13 ou 14,
**caractérisé en ce que** le matériau thermoplastique est appliqué sur la région périphérique du composant en sandwich au moyen d'une courroie de circulation sans fin.

16. Procédé selon la revendication 15,
**caractérisé en ce que** la courroie sans fin est constituée d'une feuille métallique.

17. Procédé selon la revendication 16,
**caractérisé en ce que** la feuille métallique comporte un revêtement anti-adhérent.

18. Procédé selon l'une quelconque des revendications 13 à 16,
**caractérisé par** une étape de conditionnement en température du dispositif de transfert.

19. Procédé selon l'une quelconque des revendications 13 à 18,
**caractérisé en ce que** la courroie sans fin est refroidie au moyen d'un dispositif de refroidissement.

20. Procédé selon la revendication 19,
**caractérisé en ce que** le dispositif de refroidissement peut être commandé de façon à ce que le matériau thermoplastique puisse être refroidi jusqu'à une température donnée lors de son contact avec la courroie sans fin.

21. Procédé selon la revendication 20,
**caractérisé en ce que** la température est située dans la plage allant de 140 °C à 190 °C.

22. Procédé selon l'une quelconque des revendications 16 à 21,
**caractérisé en ce que** la durée de contact entre la courroie sans fin et le composant en sandwich est située dans la plage allant de 1 seconde à 10 secondes, de préférence de 3 secondes à 4 secondes.

23. Procédé selon l'une quelconque des revendications 16 à 22,
**caractérisé en ce que** la longueur de contact quand la courroie sans fin est en contact avec le composant en sandwich est située dans la plage allant de 100 mm à 700 mm.

24. Dispositif de traitement de la région périphérique du composant en sandwich, en particulier pour mettre en oeuvre le procédé selon l'une quelconque des revendications précédentes,
comprenant un moyen de transport servant à transporter le composant en sandwich traité,
**caractérisé par** deux appareils de distribution adjacents au moyen de transport afin de déposer un matériau thermoplastique sur une région périphérique opposée du composant en sandwich sensiblement dans la région de la structure centrale seulement,
dans lequel chaque dispositif de distribution comporte un dispositif de transfert qui reçoit un matériau thermoplastique provenant d'un dispositif d'alimentation en matériau et transfert le matériau sur la région périphérique du composant en sandwich.

25. Dispositif selon la revendication 24,
**caractérisé en ce que** le dispositif de transfert comprend un élément de transfert sous la forme d'une courroie, d'un rail ou d'une bande sur lequel le matériau thermoplastique est appliqué et qui peut être mis en contact avec la région périphérique du composant en sandwich.

26. Dispositif selon la revendication 24 ou 25,
**caractérisé en ce qu'**un ou chaque dispositif de transfert comporte une courroie de circulation sans fin, et un matériau thermoplastique peut être appliqué sur chaque courroie sans fin, lesdites courroies sans fin étant adjacentes à la trajectoire de déplacement du composant en sandwich, de sorte que le matériau thermoplastique peut être appliqué sur la région périphérique respective par la courroie sans fin en contact avec la région périphérique du composant en sandwich.

27. Dispositif selon la revendication 25,
**caractérisé en ce que** chaque appareil de distribution comporte un système à buse à fente ou un appareil de distribution à rouleau adjacent à la courroie sans fin.

28. Dispositif selon la revendication 24 ou 25,
**caractérisé en ce que** la distance entre l'appareil de distribution et la trajectoire de déplacement est ajustable.

29. Dispositif selon l'une quelconque des revendications 24 à 28,
**caractérisé en ce que** les appareils de distribution sont conçus pour être verticalement ajustables, de façon à pouvoir modifier la hauteur de la courroie sans fin.

30. Dispositif selon l'une quelconque des revendications 24 à 29,
**caractérisé par** un dispositif de refroidissement adjacent à la courroie sans fin afin de refroidir la courroie sans fin.

31. Dispositif selon l'une quelconque des revendications 24 à 30,
**caractérisé en ce que** la longueur de contact lorsque la courroie sans fin est en contact avec le composant en sandwich est située dans la plage allant de 100 mm à 700 mm.
